# EUROPEAN PATENT APPLICATION

(11) **EP 4 844 244 A1**
(43) Date of publication of application: **25.11.2026**
(21) Application number: 25178259.5
(22) Date of filing: 22.05.2025
(51) Int. Cl.: F16H 59/48, F16H 61/02, F16H 59/52, F16H 59/60, F16H 61/16, F16H 59/14, F16H 59/68

(54) **A COMPUTER SYSTEM COMPRISING PROCESSING CIRCUITRY TO CONTROL A TRANSMISSION OF A VEHICLE**

(71) Applicant: Volvo Truck Corporation, 405 08 Göteborg (SE)
(72) Inventor: Winblad, Hanna, 433 62 Sävedalen (SE); Magnusson, Andreas, 443 92 Lerum (SE); Jakobsson, Samuel, 418 73 Göteborg (SE)
(74) Representative: Valea AB

(57) **Abstract**

The present disclosure relates to a computer system (400) or a method for controlling a transmission (20). The system comprising processing circuitry (402) to control a transmission (20) of a vehicle (1), wherein the transmission (20) comprises an output shaft (25) and a set of input shafts (21, 22) comprising at least a first input shaft (21), the transmission being adapted to achieve a plurality of transmission gear states, each transmission gear state being associated with a predetermined gear ratio between each input shaft (21, 22) and the output shaft (25). The processing circuitry (402) is further configured to:
- obtain acceleration information indicating that the vehicle (1) is currently in an acceleration state;
- determine whether shifting to a transmission gear state with a gear ratio lower than a current gear ratio will lead to a negative acceleration of the vehicle (1);
- select a transmission gear state based on the determination.

## Description

The disclosure relates generally to controlling a transmission of a vehicle. In particular aspects, the disclosure relates to a computer system comprising processing circuitry to control a transmission of a vehicle. The disclosure also relates to a method for controlling a transmission of a vehicle. Moreover, the disclosure relates to a powertrain, a vehicle, a computer program product and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In electric drivetrains, large gear ratio steps between different gears are common. This design may lead to a scenario where a lower gear enables acceleration, but shifting to a subsequent higher gear results in deceleration due to a substantial drop in available power. This issue typically occurs when the vehicle is traveling on a slope. For instance, during acceleration, a control system may retain the vehicle in a lower gear until an electric machine reaches its maximum rotational speed. At this point, an upshift becomes necessary to avoid exceeding the motor's speed limit. However, the higher gear may not deliver sufficient torque to maintain or increase speed, causing the vehicle to decelerate. As the speed decreases, the system may detect that the lower gear could once again provide acceleration, prompting a downshift. This can lead to a repeated cycle of upshifting and downshifting until driving conditions change.

### SUMMARY

According to a first aspect of the disclosure, a computer system comprising processing circuitry to control a transmission of a vehicle is provided. The transmission comprises an output shaft and a set of input shafts comprising at least a first input shaft. The transmission is adapted to achieve a plurality of transmission gear states, each transmission gear state being associated with a predetermined gear ratio between each input shaft in the set of input shafts and the output shaft. The processing circuitry is further configured to:
- obtain acceleration information indicating that the vehicle is currently in an acceleration state;
- determine whether shifting to a transmission gear state with a gear ratio lower than a current gear ratio will lead to a negative acceleration of the vehicle;
- select a transmission gear state based on the determination.

The first aspect of the disclosure may seek to avoid unnecessary shift to a transmission gear state that may lead to unintended negative acceleration. A technical benefit may include improved efficiency of the transmission and reduced wear of transmission components due to frequent shifts.

Optionally in some examples, including in at least one preferred example, determining whether shifting to a transmission gear state with a gear ratio lower than a current gear ratio will lead to a negative acceleration of the vehicle comprises: determining a torque at the output shaft assuming shifting to the transmission gear state with the gear ratio lower than the current gear ratio. This may enable the system to evaluate whether the resulting torque applied to the vehicle's wheels will be sufficient to produce a desired acceleration. A technical benefit may include that a transmission gear state with an appropriate gear ratio may be selected.

Optionally in some examples, including in at least one preferred example, the vehicle comprises a power system comprising at least a first electric machine and an energy storage system, wherein the torque at the output shaft assuming shifting to the transmission gear state with the gear ratio lower than the current gear ratio is determined based on at least one of the following parameters: a maximum power deliverable from the first electric machine, a maximum rotational speed of the first electric machine, a maximum torque deliverable from the first electric machine, a maximum allowed mechanical constraint that can be imposed by a drive shaft drivingly connected to the output shaft, a maximum allowable rotational speed of the drive shaft, a maximum allowed mechanical constraint that can be imposed by drive shaft bearings supporting the drive shaft, a maximum allowable power deliverable from the energy storage system. In addition to the gear ratio of a respective transmission gear state, the torque transferred to the vehicle wheels from the power system via the transmission may be dependent on a plurality of parameters, such as physical limits of driveline components. By using the above parameters, a technical benefit may include that a more accurate torque at the output shaft is determined. This may in turn allow for selection of an appropriate transmission gear state.

Optionally in some examples, including in at least one preferred example, the determination is based on at least one of the following parameters: the torque at the output shaft assuming shifting to the transmission gear state with the gear ratio lower than the current gear ratio, ambient conditions information, and a current vehicle weight. As mentioned above, the system may evaluate whether the resulting torque applied to the vehicle's wheels will be sufficient to produce a desired acceleration at the current condition. A technical benefit may include that an appropriate transmission state may be selected.

Optionally in some examples, including at least one preferred example, the ambient conditions information comprises any one or any combination of:
- road inclination,
- roll resistance, and
- air drag.

Optionally in some examples, including in at least one preferred example, the processing circuitry is further configured to:
- in response to determining that shifting to the transmission gear state with the gear ratio lower than the current gear ratio will lead to a negative acceleration of the vehicle, select the transmission gear state that is currently achieved.

Accordingly, unnecessary shift of the transmission gear state may be avoided. A technical benefit may include improved efficiency of the transmission and reduced wear of transmission components due to frequent shift.

Optionally in some examples, including in at least one preferred example, the vehicle comprises a power system comprising at least a first electric machine, wherein the processing circuitry is further configured to: control a rotational speed of the first electric machine to operate within a predefined operating range, wherein the rotational speed of the operating range is below the first electric machine's maximum rotational speed. By not operating the first electric machine at its maximum speed, a technical benefit may include that it may reduce wear on the electric machine. It may also enhance driveline energy efficiency.

Optionally in some examples, including in at least one preferred example, the processing circuitry is further configured to:
- in response to determining that shifting to the transmission gear state with the gear ratio lower than a current gear ratio will lead to a positive acceleration of the vehicle, select the transmission gear state with the gear ratio lower than the current gear ratio.

Optionally in some examples, including in at least one preferred example, the acceleration information is obtained from an acceleration sensor.

According to a second aspect of the disclosure, a powertrain for a vehicle is provided. The powertrain comprises:
- a power system,
- a transmission comprising an output shaft and a set of input shafts comprising at least a first input shaft, the transmission being adapted to achieve a plurality of transmission gear states, each transmission gear state being associated with a predetermined gear ratio between each input shaft in the set of input shafts and the output shaft, and
- a computer system according to any one of the examples of the first aspect of the disclosure.

Advantages and technical benefits of the powertrain according to the second aspect of the disclosure are analogous to the advantages and technical benefits of the first aspect of the disclosure.

Optionally in some examples, including in at least one preferred example, the power system comprises at least a first electric machine connected to the first input shaft of the set of input shafts and is adapted to provide propulsion power to the vehicle via the transmission.

Optionally in some examples, including in at least one preferred example, the power system further comprises a second electric machine, wherein the set of input shafts further comprises a second input shaft, and wherein the second electric machine is connected to the second input shaft and is adapted to provide propulsion power to the vehicle via the transmission.

Optionally in some examples, including in at least one preferred example, the transmission is drivingly connectable to a range gear arrangement comprising a low range gear state and a high range gear state, wherein a gear ratio over the range gear arrangement in the low range gear state is lower than a gear ratio in the high range gear state.

According to a third aspect of the disclosure, a vehicle is provided. The vehicle comprises the powertrain of any examples of the second aspect of the disclosure. Advantages and technical benefits of the vehicle according to the third aspect of the disclosure are analogous to the advantages and technical benefits of the first aspect of the disclosure.

According to a fourth aspect of the disclosure, a computer-implemented method for controlling a transmission of a vehicle is provided. The transmission comprises an output shaft and a set of input shafts comprising at least a first input shaft. The transmission is adapted to achieve a plurality of transmission gear states, each transmission gear state being associated with a predetermined gear ratio between each input shaft in the set of input shafts and the output shaft. The method comprises:
- obtaining, by processing circuitry of a computer system, acceleration information indicating that the vehicle is currently in an acceleration state;
- determining, by the processing circuitry, whether shifting to a transmission gear state with a gear ratio lower than a current gear ratio will lead to a negative acceleration of the vehicle;
- selecting, by the processing circuitry, a transmission gear state based on the determination.

Advantages and technical benefits of the method according to the fourth aspect of the disclosure are analogous to the advantages and technical benefits of the first aspect of the disclosure.

Optionally in some examples, including in at least one preferred example, determining whether shifting to a transmission gear state with a gear ratio lower than a current gear ratio will lead to a negative acceleration of the vehicle comprises: determining a torque at the output shaft assuming shifting to the transmission gear state with the gear ratio lower than the current gear ratio.

Optionally in some examples, including in at least one preferred example, the vehicle comprises a power system comprising at least a first electric machine and an energy storage system, wherein the torque at the output shaft assuming shifting to the transmission gear state with the gear ratio lower than the current gear ratio is determined based on at least one of the following parameters: a maximum power deliverable from the first electric machine, a maximum rotational speed of the first electric machine, a maximum torque deliverable from the first electric machine, a maximum allowed mechanical constraint that can be imposed by a drive shaft drivingly connected to the output shaft, a maximum allowable rotational speed of the drive shaft, a maximum allowed mechanical constraint that can be imposed by drive shaft bearings supporting the drive shaft, a maximum allowable power deliverable from the energy storage system.

Optionally in some examples, including in at least one preferred example, the determination is based on at least one of the following parameters: the torque at the output shaft assuming shifting to the transmission gear state with the gear ratio lower than the current gear ratio, ambient conditions information, and a current vehicle weight.

Optionally in some examples, including in at least one preferred example, the ambient conditions information comprises any one or any combination of:
- road inclination,
- roll resistance, and
- air drag.

Optionally in some examples, including in at least one preferred example, the method further comprises:
- in response to determining that shifting to the transmission gear state with the gear ratio lower than the current gear ratio will lead to a negative acceleration of the vehicle, selecting, by the processing circuitry, the transmission gear state that is currently achieved.

Optionally in some examples, including in at least one preferred example, the vehicle comprises a power system comprising at least a first electric machine, wherein the method further comprising: controlling, by the processing circuitry, the first electric machine to operate within a predefined operating range, wherein the predefined operating range is below the first electric machine's maximum rotational speed.

Optionally in some examples, including in at least one preferred example, the method further comprises:
- in response to determining that shifting to the transmission gear state with the gear ratio lower than a current gear ratio will lead to a positive acceleration of the vehicle, selecting, by the processing circuitry, the transmission gear state with the gear ratio lower than the current gear ratio.

Optionally in some examples, including in at least one preferred example, the acceleration information is obtained from an acceleration sensor.

According to a fifth aspect of the disclosure, a computer program product is provided. The computer program product comprises program code for performing, when executed by the processing circuitry, the method according to the third aspect.

According to a sixth aspect of the disclosure, a non-transitory computer-readable storage medium is provided. The non-transitory computer-readable storage medium comprises instructions, which when executed by the processing circuitry, cause the processing circuitry to perform the method according to the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic side view of a vehicle according to an example;
**FIG. 2a****-****FIG. 2c** are schematic views of a transmission of a vehicle;
**FIG. 3** is a graph showing output shaft torque for various transmission gear states across different vehicle speeds, according to an example.
**FIG. 4** schematically shows a vehicle travelling on a slope.
**FIG. 5** is a flow chart illustrating a method of controlling a transmission of a vehicle; and
**FIG. 6** is a schematic diagram of an exemplary computer system for implementing methods disclosed herein.

The detailed description set forth below provides information and examples of the disclosed technology with sufficient detail to enable those skilled in the art to practice the disclosure.

### DETAILED DESCRIPTION

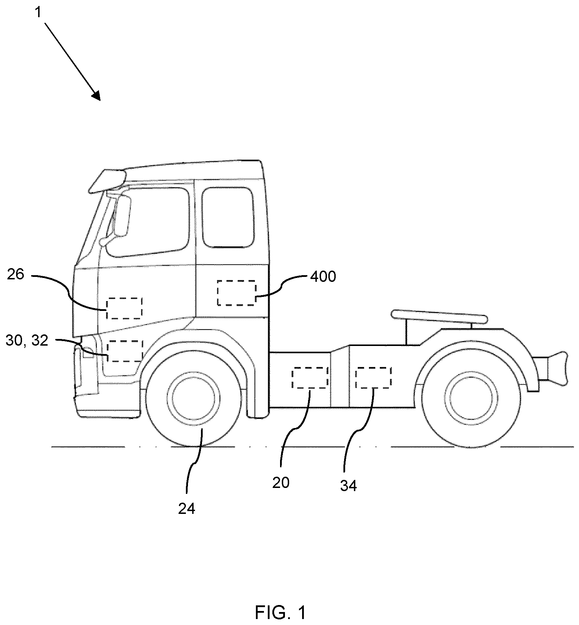

**FIG. 1** depicts a vehicle 1, which is exemplified by an electric truck. Even though an electric truck is shown, it shall be noted that the disclosure is not limited to this type of vehicle, but it may also be used for other electric vehicles, such as a bus, construction equipment, e.g., a wheel loader or an excavator. The present disclosure is also applicable for a hybrid vehicle, e.g. a vehicle comprises a combustion engine and an electric engine.

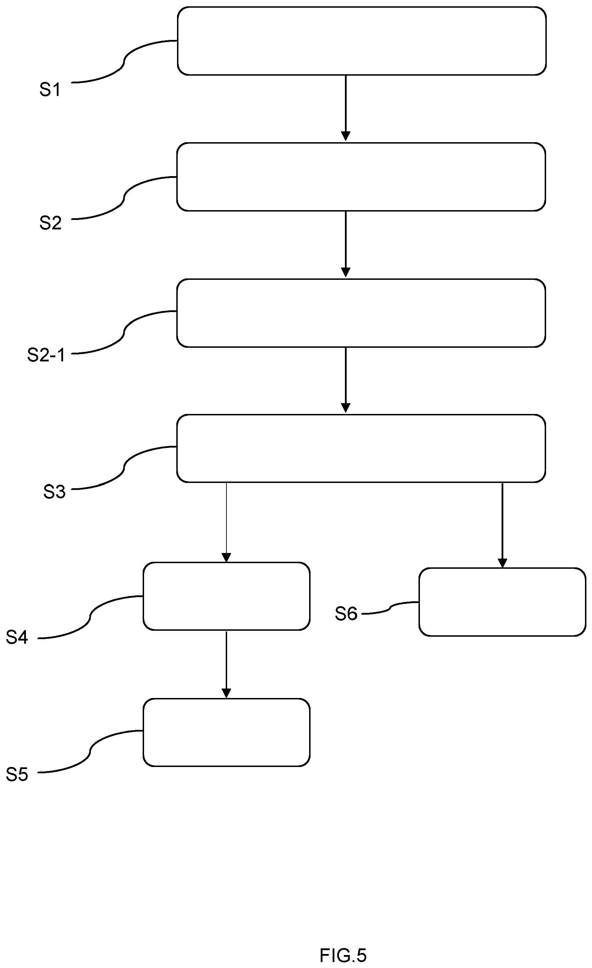

The vehicle 1 comprises a powertrain, which in turn comprises a power system 30 comprising at least a first electric machine 32. The power system 30 in some examples may additionally comprise an internal combustion engine (not shown). The power system 30 may be configured to provide propulsion power to the vehicle 1 via a transmission 20. The transmission 20 may convert a torque generated by the power system 30 to a torque that is suitable for driving at least one wheels 24 and transfer the torque to the least one wheel 24. Moreover, the vehicle 1 comprises an energy storage system 34 comprising one or more batteries for providing electric energy to the first electric machine 32. The vehicle 1 further comprises a computer system 400, which may comprise one or more control units, such as processing circuitry 402 (see FIG. 5) that may be communicatively connected to the transmission 20 and may issue control data for controlling the transmission 20 during operation of the vehicle 1.

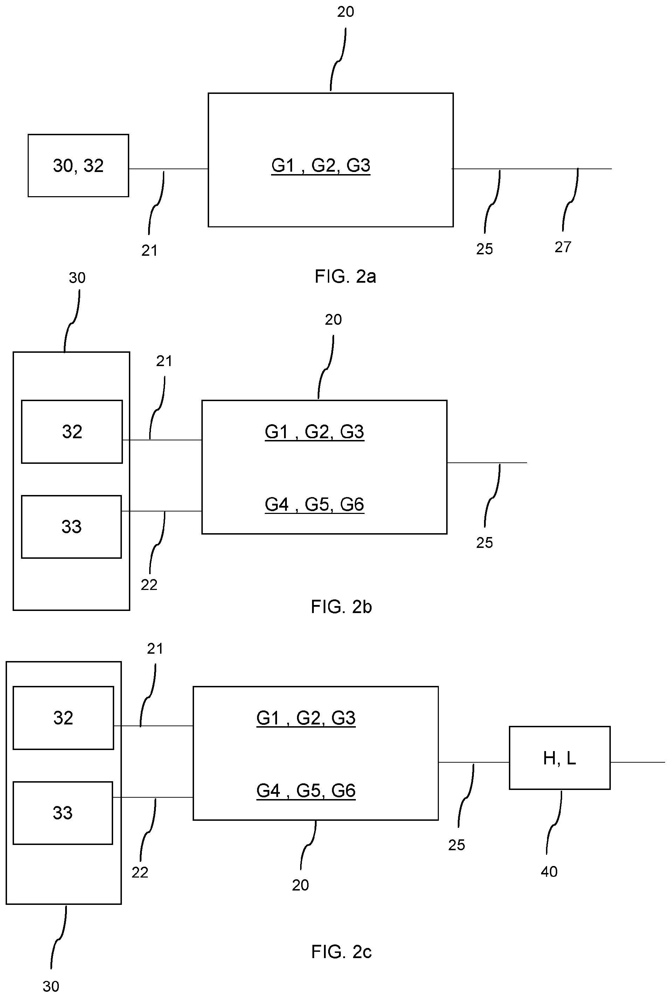

**FIG. 2a****-** **FIG. 2c** schematically show three examples of a transmission of a vehicle 1, such as the FIG. 1 vehicle. Each example of the transmission comprises an output shaft 25 and a set of input shafts 21, 22 comprising at least a first input shaft 21. The transmission 20 is adapted to achieve a plurality of transmission gear states, whereby each transmission gear state is associated with a predetermined gear ratio between each input shaft 21 22 in the set of input shafts and the output shaft 25. In the first example shown in FIG. 2a, the transmission 20 comprises a set of input shafts comprising a first input shaft 21. The first input shaft 21 is drivingly connected to the power system 30, which in this example, comprises a first electric machine 32. The transmission 20 further comprises an output shaft 25, which may be connected to a drive shaft 27 of the vehicle 1. The transmission 20 is adapted to achieve a plurality of transmission gear states, whereby each transmission gear state is associated with a predetermined gear ratio between each input shaft 21 and the output shaft 25. For instance, the transmission 20 may comprise a plurality of gears G1, G2 and G3, each of which may comprise two or more gearwheels with a predetermined gear ratio. The transmission gear state may be achieved by engaging one gear from the plurality of the gears G1, G2, G3, for instance, by using a gear engaging device (not shown). The gear ratio may correspond to rotational speeds of the first input shaft 21 and the output shaft 25, which may impact the proportion of torque transferred from the power system 30 to the set of the wheels 24. It can therefore be concluded that depending on the achieved transmission gear state with the respective gear ratio, the torque at the output shaft 25 may vary. Consequently, a resulting torque transferred to the wheels 24 may differ.

In some examples, such as the **FIG. 2b** example, the set of input shafts further comprises a second input shaft 22, and the power system 30 further comprises a second electric machine 33 being connected to the second input shaft 22. In the shown examples, the transmission 20 may enable each one of the electric machines 32, 33 to engage one gear from the plurality gears G1, G2, G3 or G4, G5, G6 simultaneously. For instance, in one transmission gear state, the first electric machine 31 may engage with G1, while the second electric machine 3 may engage with G3. In these examples, in addition to the respective gear ratio, the torque at the output shaft 25 may primarily depend on the physical limit of each one of the first and second electric machines 31 32, and the gears G1, G3 that each one of the first and second electric machines 31 32 engage. In some other examples, both of the electric machines 32,33 may share a single gear set and may engage the same one gear from the single gear set.

In some examples, such as the **FIG. 2c** example, the transmission 20, such as the output shaft 25 of the transmission 20, is drivingly connectable to a range gear arrangement 40 shiftable between a low range gear state L and a high range gear state H, whereby a gear ratio over the range gear arrangement 40 in the low range gear state is higher than a gear ratio in the high range gear state. Purely by way of example, the range gear arrangement 40 may comprise one gear state with a direct 1: 1 gear or speed ratio, corresponding to the high range gear state, and another gear state with a speed reduction corresponding to the low range gear state. When the range gear arrangement 40 is drivingly connected to the transmission 20, the transmission 20 and the range gear arrangement 40 may together provide a set of low range gears and a set of high range gears, which may constitute different transmission gear states resulting different gear ratios. In this example, the resulting torque transferred to the wheels 24 may be based on the torque at the output shaft 25 as well as the gear ratio of the gear state of the range gear arrangement 40

The torque at the output shaft 25 may primarily be dependent on a transmission gear state with a specific gear ratio that is achieved. Moreover, the torque transferred to the wheels 24 from the power system 30 via the transmission 20 may also be dependent on physical limits of driveline components including the first electric machine, the drive shaft and/or the drive shaft bearings, and physical limit of the energy storage system. As such, it can be concluded that the torque transferred to the wheels 24 with a respective transmission gear state can be determined based on at least one of the following parameters: a maximum power deliverable from the first electric machine, a maximum rotational speed of the first electric machine, a maximum torque deliverable from the first electric machine, a maximum allowed mechanical constraint that can be imposed by a drive shaft drivingly connected to the output shaft, a maximum allowable rotational speed of the drive shaft, a maximum allowed mechanical constraint that can be imposed by drive shaft bearings supporting the drive shaft, a maximum allowable power deliverable from the energy storage system. Accordingly, a resulting torque transferred to the wheels 24 may be estimated.

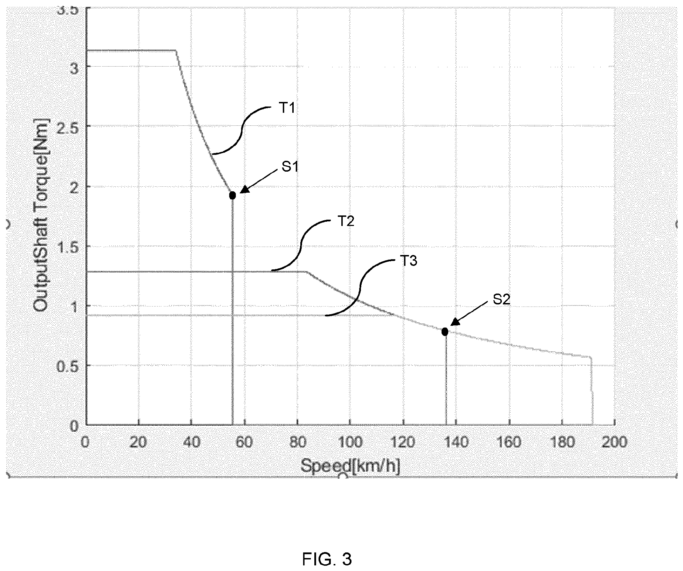

**FIG. 3** illustrates a graph of output shaft torque for various transmission gear states across different vehicle speeds, according to one example. The transmission 20 may be configured such that the gear ratio decreases stepwise during upshifting, e.g., from an initial transmission gear state T1 to a subsequent transmission gear state T2. As shown in the figure, this transition results in a significant drop in output shaft torque, occurring at a vehicle speed of approximately 57 km/h, or the shift point S1. Under certain driving conditions and acceleration demands, this torque drop may lead to repeated cycles of upshifting and downshifting when using a conventional control strategy.

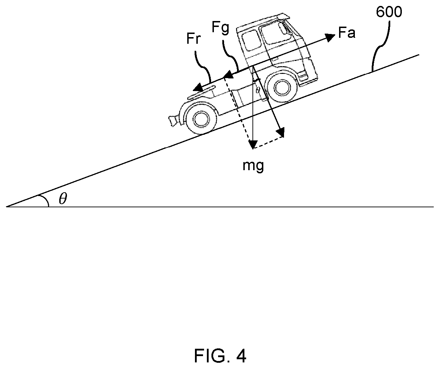

**FIG. 4** schematically shows a vehicle 1 travelling on a slope 600. As shown in the figure, there are several forces that are acting on the vehicle 1 which may oppose motion of the vehicle 1. For instance, a gravitational force Fg acting parallel to the slope 600 can be estimated based on the information about the inclination of the slope 600, such as the slope inclination angle θ and a current vehicle weight, using the below formula: ${F}_{g} = m ⋅ g ⋅ sin \left(θ\right)$
where m is mass of the vehicle which is dependent on a current weight of the vehicle, g is the acceleration due to gravity and θ is the slope inclination angle θ.

The slope inclination angle θ, which may refer to an angle θ between a horizontal plane of a level ground and the surface of the slope 600. may be estimated based on a gravitational acceleration measured by accelerometers. For instance, the gravitational force Fg acting parallel to the slope can also be expressed by: ${F}_{g} = m ⋅ g ⋅ sin \left(θ\right) = m ⋅ a ⋅ g$
where m is mass of the vehicle which is dependent on a current weight of the vehicle, g is the acceleration due to gravity and ag is the acceleration in a gravitational direction. By inserting the gravitational acceleration measured by the accelerometers, the slope inclination angle θ may be estimated accordingly.

In some other examples, tilt sensors or inclinometers may also be used to estimate the slope inclination angle θ. The tilt sensors or inclinometers may measure an angle between a direction of gravity and a vertical axis of the vehicle 100, which may be equivalent to the slope inclination angle θ.

Moreover, a vehicle's resistance force Fᵣ is acting on the vehicle which may also oppose motion of the vehicle 1. These resistance force Fr may be estimated using information about roll resistance and air drag.

When the gravitational force F_{g} acting parallel to the slope 600 and the vehicle's resistance force Fr are estimated, the minimal force Fₐ required to accelerate the vehicle 1 may be determined.

**FIG. 5** illustrates a flowchart of actions involved in a method for controlling a transmission 20 of a vehicle 1. The method may be performed by processing circuitry of a computer system 400, such as the vehicle onboard computer system 400. The method comprises the actions listed in the following, which, unless otherwise indicated, may be taken in any suitable order.

S1: obtaining acceleration information indicating that the vehicle is currently in an acceleration state. The acceleration information may be obtained, for example, from wheel speed sensor.

S2: determining whether shifting to a transmission gear state with a gear ratio lower than a current gear ratio will lead to a negative acceleration of the vehicle.

Preferably, determining whether shifting to a transmission gear state with a gear ratio lower than the current gear ratio will lead to a negative acceleration of the vehicle comprises the action S2-1: determining a torque at the output shaft 25 assuming shifting to the transmission gear state with the gear ratio lower than the current gear ratio. Accordingly, the power and the force can be transferred to the wheels 24 can be estimated. This force can then be compared to the minimum force Fa required to accelerate the vehicle 1, in order to determine whether the available power is sufficient. If it is insufficient, it may result in negative acceleration. As such, it may be concluded that the determination is based on at least one of the following parameters, as discussed in paragraphs 49-55: the torque at the output shaft 25, ambient conditions information, and a current vehicle weight, whereby the ambient conditions comprise at least one of the following parameters: road inclination, roll resistance, and air drag.

Preferably, the torque at the output shaft 25 assuming shifting to the transmission gear state with the gear ratio lower than the current gear ratio is determined based on at least one of the following parameters: a maximum power deliverable from the first electric machine, a maximum rotational speed of the first electric machine, a maximum torque deliverable from the first electric machine, a maximum allowed mechanical constraint that can be imposed by a drive shaft drivingly connected to the output shaft, a maximum allowable rotational speed of the drive shaft, a maximum allowed mechanical constraint that can be imposed by drive shaft bearings supporting the drive shaft, a maximum allowable power transferred from the energy storage system.

The method further comprises the action S3: selecting a transmission gear state based on the determination.

In some examples, the method may further comprise S4: in response to determining that shifting to a transmission gear state with the gear ratio lower than the current gear ratio will lead to a negative acceleration of the vehicle 1, selecting the transmission gear state that is currently achieved.

Preferably, the method further comprises S5: controlling a rotational speed of the first electric machine 32 to operate within a predefined operating range, wherein the predefined operating range of the rotational speed is below the first electric machine's maximum rotational speed. As such, it may reduce wear on the electric machine, and may also enhance driveline energy efficiency.

In some examples, the method may further comprise S6: in response to determining that shifting to the transmission gear state with the gear ratio lower than the current gear ratio will lead to a positive acceleration of the vehicle 1, selecting the transmission gear state with the gear ratio lower than the current gear ratio.

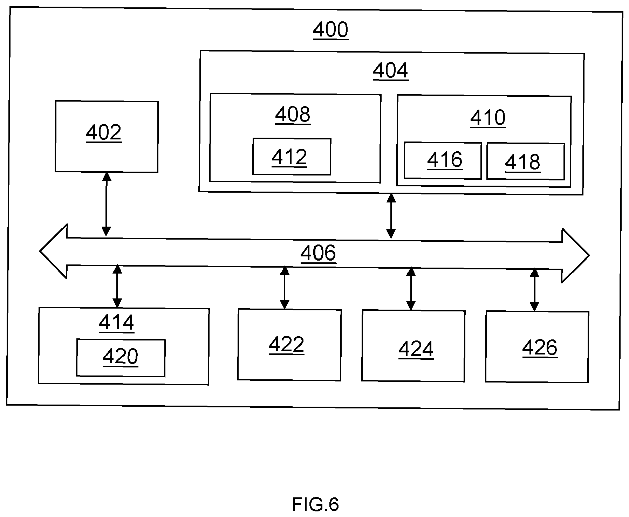

**FIG 6** illustrates a computer system 400 for performing the method. Computer system **400** is adapted to execute instructions from a computer-readable medium to perform these and/or any of the functions or processing described herein. The computer system **400** may be connected e.g., networked) to other machines in a LAN, an intranet, an extranet, or the Internet. While only a single device is illustrated, the computer system 400 may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit ECU, processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor DSP, an Application Specific Integrated Circuit ASIC, a Field Programmable Gate Array FPGA, a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller, a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM, electrically erasable programmable read-only memory EEPROM, etc., and volatile memory **410** e.g., random-access memory RAM)), or any other medium which can be used to carry or store desired program code in the form of machine-executable instructions or data structures and which can be accessed by a computer or other machine with processing circuitry **402.** A basic input/output system BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive HDD) e.g., enhanced integrated drive electronics EIDE or serial advanced technology attachment SATA, HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium e.g., single medium or multiple media), such as the storage device **414,** which includes complex programming instructions e.g., complex computer-readable program code to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product e.g., readable storage medium storing the computer program **420** thereon, where at least a portion of a computer program **420** may be loadable e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE 1394 serial port, a Universal Serial Bus USB) port, an IR interface, and the like. The computer system **400** may include an output device interface **424** configured to forward output, such as to a display, a video display unit e.g., a liquid crystal display LCD or a cathode ray tube CRT. The computer system **400** may include a communications interface **426** suitable for communicating with a network as appropriate or desired.

Moreover, the present disclosure may be exemplified by any one of the below examples and combination of examples.
Example 1. A computer system (400) comprising processing circuitry (402) to control a transmission (20) of a vehicle (1), wherein the transmission (20) comprises an output shaft (25) and a set of input shafts (21, 22) comprising at least a first input shaft (21), the transmission being adapted to achieve a plurality of transmission gear states, each transmission gear state being associated with a predetermined gear ratio between each input shaft (21, 22) in the set of input shafts and the output shaft (25), and wherein the processing circuitry (402) is further configured to:
   - obtain acceleration information indicating that the vehicle (1) is currently in an acceleration state;
   - determine whether shifting to a transmission gear state with a gear ratio lower than a current gear ratio will lead to a negative acceleration of the vehicle (1);
   - select a transmission gear state based on the determination.
Example 2. The computer system (400) according to example 1, wherein determining whether shifting to a transmission gear state with a gear ratio lower than a current gear ratio will lead to a negative acceleration of the vehicle (1) comprises: determining a torque at the output shaft (25) assuming shifting to the transmission gear state with the gear ratio lower than the current gear ratio.
Example 3. The computer system (400) according to example 2, wherein the vehicle (1) comprises a power system (30) comprising at least a first electric machine (32) and an energy storage system, wherein the torque at the output shaft (25) assuming shifting to the transmission gear state with the gear ratio lower than the current gear ratio is determined based on at least one of the following parameters: a maximum power deliverable from the first electric machine (32), a maximum rotational speed of the first electric machine (32), a maximum torque deliverable from the first electric machine (32), a maximum allowed mechanical constraint that can be imposed by a drive shaft drivingly connected to the output shaft (25), a maximum allowable rotational speed of the drive shaft, a maximum allowed mechanical constraint that can be imposed by drive shaft bearings supporting the drive shaft, a maximum allowable power deliverable from the energy storage system.
Example 4. The computer system (400) according to any one of examples 2-3, wherein the determination is based on at least one of the following parameters: the torque at the output shaft (25) assuming shifting to the transmission gear state with the gear ratio lower than the current gear ratio, ambient conditions information, and a current vehicle weight.
Example 5. The computer system (400) according to example 4, wherein the ambient conditions information comprises any one or any combination of:
   - road inclination,
   - roll resistance, and
   - air drag.
Example 6. The computer system (400) according to any one of examples 1-5, wherein the processing circuitry is further configured to:
   - in response to determining that shifting to the transmission gear state with the gear ratio lower than the current gear ratio will lead to a negative acceleration of the vehicle (1), select the transmission gear state that is currently achieved.
Example 7. The computer system (400) according to example 6, wherein the vehicle (1) comprises a power system comprising at least a first electric machine (32), wherein the processing circuitry is further configured to: control a rotational speed of the first electric machine to operate within a predefined operating range, wherein the rotational speed of the operating range is below the first electric machine's maximum rotational speed.
Example 8. The computer system (400) according to any of examples 1-7, wherein the processing circuitry is further configured to:
   - in response to determining that shifting to the transmission gear state with the gear ratio lower than a current gear ratio will lead to a positive acceleration of the vehicle (1), select the transmission gear state with the gear ratio lower than the current gear ratio.
Example 9. The computer system (400) of any one of the preceding examples, wherein the acceleration information is obtained from an acceleration sensor.
Example 10. A powertrain for a vehicle, wherein the powertrain comprises:
   - a power system (30),
   - a transmission (20) comprising an output shaft (25) and a set of input shafts (21, 22) comprising at least a first input shaft (21), the transmission being adapted to achieve a plurality of transmission gear states, each transmission gear state being associated with a predetermined gear ratio between each input shaft (21, 22) in the set of input shafts and the output shaft (25), and
   - a computer system (400) according to any one of examples 1-9.
Example 11. The powertrain according to example 10, wherein the power system (30) comprises at least a first electric machine (32) connected to the first input shaft (21) of the set of input shafts and is adapted to provide propulsion power to the vehicle (1) via the transmission (20).
Example 12. The powertrain according to example 11, wherein the power system (30) further comprises a second electric machine (33), wherein the set of input shafts further comprises a second input shaft (22), and wherein the second electric machine (33) is connected to the second input shaft (22) and is adapted to provide propulsion power to the vehicle (1) via the transmission (20).
Example 13. The powertrain according to any one of examples 10-12, wherein the transmission(20) is drivingly connectable to a range gear arrangement (40) comprising a low range gear state (L) and a high range gear state (H), wherein a gear ratio over the range gear arrangement in the low range gear state is lower than a gear ratio in the high range gear state.
Example 14. A vehicle comprising the powertrain of any of examples 10-13.
Example 15. A computer-implemented method for controlling a transmission (20) of a vehicle, wherein the transmission (20) comprises an output shaft (25) and a set of input shafts (21, 22) comprising at least a first input shaft (21), the transmission being adapted to achieve a plurality of transmission gear states, each transmission gear state being associated with a predetermined gear ratio between each input shaft (21, 22) in the set of input shafts and the output shaft (25), and wherein the method comprises:
   - obtaining (S1), by processing circuitry of a computer system (400), acceleration information indicating that the vehicle is currently in an acceleration state;
   - determining (S2), by the processing circuitry, whether shifting to a transmission gear state with a gear ratio lower than a current gear ratio will lead to a negative acceleration of the vehicle;
   - selecting (S3), by the processing circuitry, a transmission gear state based on the determination.
Example 16. The method according to example 15, wherein determining (S2) whether shifting to a transmission gear state with a gear ratio lower than a current gear ratio will lead to a negative acceleration of the vehicle comprises: determining (S2-1) a torque at the output shaft (25) assuming shifting to the transmission gear state with the gear ratio lower than the current gear ratio.
Example 17. The method according to example 16, wherein the vehicle (1) comprises a power system comprising at least a first electric machine (32) and an energy storage system, wherein the torque at the output shaft (25) assuming shifting to the transmission gear state with the gear ratio lower than the current gear ratio is determined based on at least one of the following parameters: a maximum power deliverable from the first electric machine, a maximum rotational speed of the first electric machine, a maximum torque deliverable from the first electric machine, a maximum allowed mechanical constraint that can be imposed by a drive shaft drivingly connected to the output shaft, a maximum allowable rotational speed of the drive shaft, a maximum allowed mechanical constraint that can be imposed by drive shaft bearings supporting the drive shaft, a maximum allowable power deliverable from the energy storage system.
Example 18. The method according to example 17, wherein the determination is based on at least one of the following parameters: the torque at the output shaft (25) assuming shifting to the transmission gear state with the gear ratio lower than the current gear ratio, ambient conditions information, and a current vehicle weight.
Example 19. The method according to example 18, wherein the ambient conditions information comprises any one or any combination of:
   - road inclination,
   - roll resistance, and
   - air drag.
Example 20. The method according to any one of examples 15-19, further comprising:
   - in response to determining that shifting to the transmission gear state with the gear ratio lower than the current gear ratio will lead to a negative acceleration of the vehicle (1), selecting (S4), by the processing circuitry, the transmission gear state that is currently achieved.
Example 21. The method according to example 20, wherein the vehicle (1) comprises a power system comprising at least a first electric machine (32), wherein the method further comprising: controlling (S5), by the processing circuitry, the first electric machine (32) to operate within a predefined operating range, wherein the predefined operating range is below the first electric machine's maximum rotational speed.
Example 22. The method according to any one of examples 15-21, further comprising:
   - in response to determining that shifting to the transmission gear state with the gear ratio lower than a current gear ratio will lead to a positive acceleration of the vehicle (1), selecting (S6), by the processing circuitry, the transmission gear state with the gear ratio lower than the current gear ratio.
Example 23. The method according to any one of examples 15-22, wherein the acceleration information is obtained from an acceleration sensor.
Example 24. A computer program product comprising program code for performing, when executed by the processing circuitry, the method of any of examples 15-23.
Example 25. A non-transitory computer-readable storage medium comprising instructions, which when executed by the processing circuitry, cause the processing circuitry to perform the method of any of examples 15-23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) to control a transmission (20) of a vehicle (1), wherein the transmission (20) comprises an output shaft (25) and a set of input shafts (21, 22) comprising at least a first input shaft (21), the transmission being adapted to achieve a plurality of transmission gear states, each transmission gear state being associated with a predetermined gear ratio between each input shaft (21, 22) in the set of input shafts and the output shaft (25), and wherein the processing circuitry (402) is further configured to:
- obtain acceleration information indicating that the vehicle (1) is currently in an acceleration state;
- determine whether shifting to a transmission gear state with a gear ratio lower than a current gear ratio will lead to a negative acceleration of the vehicle (1);
- select a transmission gear state based on the determination.

2. The computer system (400) according to claim 1, wherein determining whether shifting to a transmission gear state with a gear ratio lower than a current gear ratio will lead to a negative acceleration of the vehicle (1) comprises: determining a torque at the output shaft (25) assuming shifting to the transmission gear state with the gear ratio lower than the current gear ratio.

3. The computer system (400) according to claim 2, wherein the vehicle (1) comprises a power system (30) comprising at least a first electric machine (32) and an energy storage system, wherein the torque at the output shaft (25) assuming shifting to the transmission gear state with the gear ratio lower than the current gear ratio is determined based on at least one of the following parameters: a maximum power deliverable from the first electric machine (32), a maximum rotational speed of the first electric machine (32), a maximum torque deliverable from the first electric machine (32), a maximum allowed mechanical constraint that can be imposed by a drive shaft drivingly connected to the output shaft (25), a maximum allowable rotational speed of the drive shaft, a maximum allowed mechanical constraint that can be imposed by drive shaft bearings supporting the drive shaft, a maximum allowable power deliverable from the energy storage system.

4. The computer system (400) according to any one of claims 2-3, wherein the determination is based on at least one of the following parameters: the torque at the output shaft (25) assuming shifting to the transmission gear state with the gear ratio lower than the current gear ratio, ambient conditions information, and a current vehicle weight.

5. The computer system (400) according to any one of claims 1-4, wherein the processing circuitry is further configured to:
- in response to determining that shifting to the transmission gear state with the gear ratio lower than the current gear ratio will lead to a negative acceleration of the vehicle (1), select the transmission gear state that is currently achieved.

6. The computer system (400) according to claim 5, wherein the vehicle (1) comprises a power system comprising at least a first electric machine (32), wherein the processing circuitry is further configured to: control a rotational speed of the first electric machine to operate within a predefined operating range, wherein the rotational speed of the operating range is below the first electric machine's maximum rotational speed.

7. The computer system (400) according to any of claims 1-6, wherein the processing circuitry is further configured to:
- in response to determining that shifting to the transmission gear state with the gear ratio lower than a current gear ratio will lead to a positive acceleration of the vehicle (1), select the transmission gear state with the gear ratio lower than the current gear ratio.

8. The computer system (400) of any one of the preceding claims, wherein the acceleration information is obtained from an acceleration sensor.

9. A powertrain for a vehicle, wherein the powertrain comprises:
- a power system (30),
- a transmission (20) comprising an output shaft (25) and a set of input shafts (21, 22) comprising at least a first input shaft (21), the transmission being adapted to achieve a plurality of transmission gear states, each transmission gear state being associated with a predetermined gear ratio between each input shaft (21, 22) in the set of input shafts and the output shaft (25), and
- a computer system (400) according to any one of claims 1-8.

10. The powertrain according to claim 9, wherein the power system (30) comprises at least a first electric machine (32) connected to the first input shaft (21) of the set of input shafts and is adapted to provide propulsion power to the vehicle (1) via the transmission (20).

11. A computer-implemented method for controlling a transmission (20) of a vehicle, wherein the transmission (20) comprises an output shaft (25) and a set of input shafts (21, 22) comprising at least a first input shaft (21), the transmission being adapted to achieve a plurality of transmission gear states, each transmission gear state being associated with a predetermined gear ratio between each input shaft (21, 22) in the set of input shafts and the output shaft (25), and wherein the method comprises:
- obtaining (S1), by processing circuitry of a computer system (400), acceleration information indicating that the vehicle is currently in an acceleration state;
- determining (S2), by the processing circuitry, whether shifting to a transmission gear state with a gear ratio lower than a current gear ratio will lead to a negative acceleration of the vehicle;
- selecting (S3), by the processing circuitry, a transmission gear state based on the determination.

12. The method according to claim 11, wherein determining (S2) whether shifting to a transmission gear state with a gear ratio lower than a current gear ratio will lead to a negative acceleration of the vehicle comprises: determining (S2-1) a torque at the output shaft (25) assuming shifting to the transmission gear state with the gear ratio lower than the current gear ratio.

13. The method according to claim 12, wherein the vehicle (1) comprises a power system comprising at least a first electric machine (32) and an energy storage system, wherein the torque at the output shaft (25) assuming shifting to the transmission gear state with the gear ratio lower than the current gear ratio is determined based on at least one of the following parameters: a maximum power deliverable from the first electric machine, a maximum rotational speed of the first electric machine, a maximum torque deliverable from the first electric machine, a maximum allowed mechanical constraint that can be imposed by a drive shaft drivingly connected to the output shaft, a maximum allowable rotational speed of the drive shaft, a maximum allowed mechanical constraint that can be imposed by drive shaft bearings supporting the drive shaft, a maximum allowable power deliverable from the energy storage system.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.
